Europäisches Patentamt

European Patent Office

Office européen des brevets

(19)

(11) Numéro de publication: **0 225 901
B1**

(12)                  FASCICULE DE BREVET EUROPEEN

(45) Date de publication du fascicule du brevet:
20.12.89

(51) Int. Cl.⁴: **F 16 L 11/08,** F 16 L 11/10

(21) Numéro de dépôt: **86903424.9**

(22) Date de dépôt: **06.06.86**

(86) Numéro de dépôt international:
**PCT/FR 86/00194**

(87) Numéro de publication internationale:
**WO 86/07432 (18.12.86 Gazette 86/27)**

(54) **CANALISATION UTILISABLE NOTAMMENT POUR LE TRANSPORT DE FLUIDES ET PERMETTANT DE LIMITER LA PERMEABILITE AUX FLUIDES TRANSPORTES.**

(30) Priorité: **11.06.85 FR 8508938
20.09.85 FR 8514019**

(43) Date de publication de la demande:
**24.06.87 Bulletin 87/26**

(45) Mention de la délivrance du brevet:
**20.12.89 Bulletin 89/51**

(84) Etats contractants désignés:
**GB IT**

(56) Documents cités:
**EP-A- 0 068 128
FR-A- 2 381 581
FR-A- 2 467 347**

(73) Titulaire: **INSTITUT FRANCAIS DU PETROLE, 4, Avenue de Bois-Préau, F-92502 Rueil-Malmaison (FR)**

(72) Inventeur: **DELACOUR, Jacques, 18, rue Pierre Guérin, F-75016 Paris (FR)**
Inventeur: **JARRIN, Jacques, 31, rue du Gué, F-92500 Rueil-Malmaison (FR)**
Inventeur: **DEWIMILLE, Bernard, 8, rue Vlaminck, F-91350 Grigny (FR)**
Inventeur: **DAWANS, François, Place de la Feuilleraie 1, rue Pasteur, F-78380 Bougival (FR)**

(74) Mandataire: **Aubel, Pierre et al, Institut Français du Pétrole Département Brevets 4, avenue de Bois Préau, F-92502 Rueil-Malmaison (FR)**

## Description

La présente invention concerne une canalisation utilisable notamment pour le transport de fluides et permettant de limiter la perméabilité aux fluides transportés, par exemple aux fluides corrosifs.

L'invention s'applique notamment au domaine du transport de fluides liquides ou gazeux, notamment des hydrocarbures, dans des canalisations susceptibles d'être utilisées sous forte pression et à des températures élevées pendant de longues périodes de temps.

On considérera plus particulièrement dans ce qui suit l'application de l'invention à la réalisation de canalisations flexibles et de canalisations rigides en résine armée.

Par tubes flexibles, ou flexibles, on entend ici des conduites ayant une flexibilité suffisante pour accepter (sans détérioration) un rayon de courbure R de valeur inférieure ou égale à a x d, d étant le diamètre du tube mesuré avec la même unité R et a un coefficient numérique dont la valeur ne dépasse pas quelques unités, 4 à 5 par exemple.

Une canalisation flexible destinée à fonctionner sous haute pression (ou flexible) se compose, par exemple, des éléments suivants:

– un feuillard métallique agrafé, destiné à éviter l'écrasement de la conduite dû à la différence des pressions régnant à l'intérieur et à l'extérieur;

– une gaine interne souple en matériau plastique ou élastomère, assurant en grande partie l'étanchéité interne de la conduite;

– au moins une couche d'armatures résistant aux efforts de traction et/ou de pression interne et,

– une seconde gaine souple en matériau plastique ou élastomère assurant l'étanchéité externe de la conduite.

Une canalisation rigide distinée à fonctionner sous haute pression se compose par exemple des éléments suivants:

– une gaine interne molle et très souple

– une gaine externe formée par une couche de bobinage de fibres préimprégnées par une résine thermodurcissable.

Les problèmes inhérents au transport de fluides liquides ou gazeux à températures et pressions élevées dans ces types de canalisations sont liés à la perméabilité de produits utilisés.

Pour les conduites flexibles ces problèmes sont d'une part, la perméabilité du matériau constituant la gaine interne dite d'étanchéité, cette perméabilité augmentant très sensiblement avec la température et la pression et, d'autre part, l'accumulation de gaz entre les gaines interne et externe, due au fait que la perméabilité de la gaine externe peut être largement inférieure à celle de la gaine interne.

Notamment dans le cas de transport d'hydrocarbures liquides ou gazeux susceptibles de contenir des agents corrosifs tels que $H_2S$, $CO_2$, ..., cette accumulation peut provoquer une corrosion accélérée des armatures métalliques.

En outre, la pression régnant entre les deux gaines d'étanchéité peut devenir supérieure à la pression externe s'appliquant sur le flexible et provoquer l'éclatement de la gaine externe.

De plus, ces phénomènes de perméabilité se traduisent par une perte plus ou moins importante de fluide transporté.

Pour les conduites rigides ces problèmes sont dus à la souplesse limitée des canalisations qui arrive à provoquer des microfissures sous contraintes mécaniques, pouvant amener les fluides à perler.

Il est connu que l'utilisation dans un flexible d'un ondulé métallique continu à la place de la gaine plastique interne permet d'éviter les inconvénients inhérents aux gaines plastiques, mais cette solution présente l'inconvénient d'une grande sensibilité à la corrosion, l'ondulé métallique étant au contact direct du fluide. De plus, la géométrie de l'ondulé peut perturber l'écoulement des fluides ou le passage éventuel d'outils spéciaux (par exemple de mesure ou de nettoyage) dans la canalisation.

La demande de brevet européen EP-A-0 111 169 concerne un tube multicouches étanche aux gaz. Il comprend notamment une enveloppe métallique solidaire du pourtour extérieur d'une gaine plastique ainsi que du pourtour intérieur d'un tube extérieur. L'assemblage solidaire est enroulé en spirale bord à bord, soit à chaud de façon à constituer un joint avec la gaine de plastique rendu mou, soit au moyen d'une colle durcissable à froid ou à chaud. Cette technique d'enroulement bord à bord de couches solidaires entre elles ne peut s'appliquer qu'aux tubes rigides et non aux flexibles qui perdraient alors toute leur flexibilité.

L'art antérieur dans les techniques de réalisation de conduites est par exemple illustrée par les brevets FR-A-2 467 347 ou EP-A-0 068 128.

Le brevet FR-A-2 467 347 décrit un tube flexible résistant notamment aux charges radiales en particulier aux efforts tant intérieurs qu'extérieurs. Ce tube est constitué d'un tube noyau en matériau élastique, pour réaliser l'étanchéite aux fluides transportés, qui est recouvert d'une bande profilée présentant un profil en Z destiné à résister aux efforts de pression dirigés soit vers l'intérieur, soit vers l'extérieur du tube. Cette bande profilée, qui sert d'armure de pression et qui est résistance à la traction ne permet pas, notamment de part sa rigidité, de limiter notablement la perméabilité du tube aux gaz.

Appliquée aux tubes flexibles, la présente invention permet de limiter la perméabilité à travers les gaines souples sans modifier la géométrie interne du tube et sans réduire la flexibilité de la canalisation. Elle concerne une canalisation telle que définie dans la revendication 1.

Un des avantages essentiels du recouvrement ainsi assuré selon l'invention est le contact des couches métalliques sous l'effet de la pression des fluides sur la gaine interne, ce qui renforce l'étanchéité du flexible tout en maintenant intacte sa flexibilité, puisque les spires peuvent jouer les unes sur les autres.

La couche métallique peut comporter une couche de ruban métallique collée à ladite gaine intérieure sur une partie de la largeur de cette couche en contact avec ladite gaine intérieure, les spires du ruban métallique pouvant jouer librement les unes sur les autres, ce qui confère une grande liberté de mouvement aux spires lors des épreuves d'enroulement ou de déroulement du flexible.

Il peut être aussi intéressant, selon un autre mode de réalisation, que la couche métallique comporte une couche de ruban métallique collée à une enveloppe externe sur une partie de la largeur de cette couche en contact avec ladite enveloppe externe, les spires du ruban métallique pouvant jouer librement les unes sur les autres.

Le collage tel que décrit peut permettre d'éviter les modifications de pas d'enroulement pouvant résulter des déformations de la canalisation lors de sa manutention pour le stockage ou/et en service.

Le collage peut, par ailleurs, être réalisé de façon continue ou discontinue, mais on a obtenu préférentiellement de meilleus résultats lorsque le collage était continu sur une partie du ruban en contact avec l'une ou l'autre des gaines souples.

De manière avantageuse, on peut coller le ruban au niveau du bord en contact avec ladite gaine intérieure ou avec l'enveloppe externe, ce qui peut permettre d'éviter les mouvements relatifs de ce bord en contact avec la gaine ou l'enveloppe et de diminuer les risques d'entaillage de la gaine ou de l'enveloppe par ce bord au contact du fluide intérieur ou extérieur.

La couche métallique selon l'invention peut être collée avec une colle durcissable à froid ou à chaud ou thermofusible suivant les cas ou les types de matériaux. Eventuellement, un primaire d'adhérence peut être déposé sur la gaine et/ou le ruban.

Selon un autre mode de réalisation, la canalisation peut comporter au moins deux couches superposées de ruban métallique, la couche de ruban en contact avec la gaine intérieure étant collée à celle-ci sur une partie de la largeur du ruban métallique et la couche en contact avec la gaine extérieure étant collée à celle-ci sur une partie de la largeur du ruban métallique.

L'objectif de la présente invention appliquée aux canalisations rigides est atteint lorsque l'on enroule entre la gaine intérieure souple et la gaine extérieure comprenant le bobinage de fibres préimprégnées par une résine thermodurcissable au moins une couche de ruban métallique plat que l'on colle à la gaine intérieure sur la majeur partie au moins de la largeur du ruban.

Ce ruban est enroulé en spirale avec un angle d'enroulement $\alpha$ supérieur à 50° et inférieur à 90° par rapport à l'axe de la canalisation, les spires de ce ruban présentant des zones de superposition de façon à assurer un recouvrement total de ladite gaine intérieure, les zones de superposition des spires du ruban d'une part, et les zones comprises entre lesdites zones de superposition d'autre part, ayant chacune une largeur au moins égale à l'amplitude de la déformation imposée auxdites gaines par la traction ou flexion maximale de la canalisation ou lors d'une décompression.

Les zones de superposition ne sont pas collées. Cependant, si on préfère les coller pour améliorer l'étanchéité, on choisira de préférence une colle souple de type néoprène susceptible d'accepter la déformation imposée.

Le collage tel que décrit peut permettre d'obtenir une canalisation de section constante quasi étanche aux gaz et d'éviter les modifications de pas d'enroulement pouvant résulter des déformations de la canalisation lors de sa manutention pour le stockage ou/et en service.

Aussi bien pour les canalisations rigides que les canalisations flexibles, on peut, de manière préférée, utiliser des rubans de métal amorphe ou d'alliages de métaux amorphes, tels que décrits dans les brevets d'invention français FR-A-2 368 324 et FR-A-2 381 581, en raison de leurs propriétés mécaniques supérieures à celles des métaux ou alliages de métaux cristallins correspondants, notamment leurs caractéristiques de résistance et de dureté jusqu'à 3700 MPa (370 kg/mm²) et 1 100 MPa (1 100 kg/mm²) respectivement et leur haute limite d'élasticité. Ces métaux amorphes sont habituellement utilisés pour leurs résistances mécaniques isotropes et d'autres propriétés physiques isotropes telles que l'aptitude à la magnétisation.

Les fluides susceptibles d'être transportés étant corrosifs, on peut utiliser de manière préférée, surtout lorsque les fluides contiennent de l'acide sulfhydrique, des métaux résistant à la corrosion tels que les alliages présentant une composition qui comprend notamment du chrome et/ou du nickel et/ou du cobalt et/ou du molybdène.

Des rubans de métaux amorphes présentant une composition qui comprend notamment du fer, du chrome, du phosphore, du carbone, et éventuellement du nickel, du cobalt ou du molybdène, seuls ou en mélange, avec un pourcentage atomique de métalloïdes (P, C, B, etc...), de préférence au plus égal à 20%, ont donné d'excellents résultats en matière d'étanchéité aux gaz et de résistance à la corrosion. La largeur des rubans sera de préférence au moins égale à 1 cm et son épaisseur peut varier du 1/100 mm à quelques dixièmes de millimètre et de préférence de 5/100 mm à 5/10 mm.

Tous les thermoplastiques ou élastomères pouvant être extrudés sont utilisables avec des épaisseurs de paroi adaptées suivant chaque cas de charge. On peut, par exemple, utiliser en tant que thermoplastique les polyamides, polyoléfines ou polymères fluorés (P.V.D.F.) et des élastomères synthétiques ou naturels.

Lorsque la canalisation comporte plusieurs gaines en matériau thermoplastique ou en élastomère, telle une gaine extérieure et une gaine intérieure, le matériau de l'une peut être différent de celui-ci de l'autre.

L'invention sera mieux comprise au vu des figures annexées ci-dessous montrant des exemples de réalisation parmi lesquelles:

- les figures 1, 2 et 3 représentent une canalisation flexible selon l'invention en coupe longitudinale,

- la figure 4 montre un autre mode de réalisation de canalisation flexible selon l'invention en coupe longitudinale,

- la figure 5 illustre un mode préféré de réalisation selon l'invention dans le cas d'un flexible haute pression (l'épaisseur des différentes couches n'étant pas représentée à la même échelle),

- la figure 6 représente une canalisation rigide selon l'invention en coupe longitudinale,

- la figure 7 montre un mode de réalisation de canalisation rigide selon l'invention en coupe longitudinale, et

- la figure 8 illustre un autre mode de réalisation de canalisation rigide en coupe longitudinale adapté à des grandes performances.

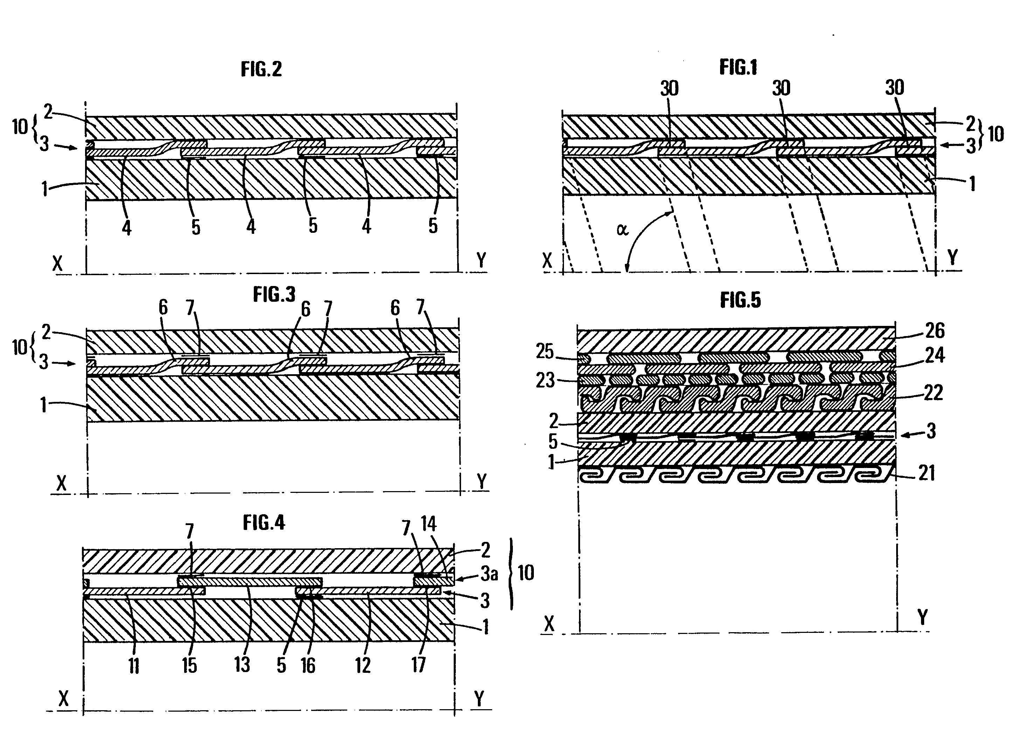

Dans les figures 1 à 5, où X-Y représente l'axe longitudinal du flexible 10, un tube ou gaine interne en thermoplastique ou en élastomère 1 a été extrudé et on a enroulé selon l'invention un ruban métallique 3 avec une tension suffisante pour l'appliquer contre la gaine intérieure 1. Le ruban a été enroulé en hélice sous un angle $\alpha$ supérieur à 50° et inférieur à 90° par rapport à l'axe de la canalisation, et avec des zones de superposition (30, Fig. 1; 15, 16 et 17, Fig. 4) de largeur au moins égale à l'amplitude de la déformation (élongation ou raccourcissement) imposée au stockage et/ou en service à la gaine extérieure 10 qui peut comporter une enveloppe externe 2 et une couche métallique 3. Cette gaine externe 10 a été extrudée au-dessus de la couche métallique selon l'invention et vient s'appliquer sur sa partie externe.

Suivant la figure 2, on peut éventuellement coller ce ruban 3 sur une partie de la largeur qui est en contact 4, voire sur le bord en contact 5 avec ladite gaine intérieure 1 du flexible.

Suivant la figure 3, le ruban peut être collé sur une partie en contact 6, voire sur le bord en contact 7 avec l'enveloppe extérieure 2 du flexible.

La figure 4 représente un autre mode de réalisation de flexible selon l'invention où on a enroulé sur la gaine intérieure 1 une première couche de ruban 3 dont les spires 11 et 12 ne se recouvrent pas et où la seconde couche 3a avec les spires 13 et 14 recouvrent les précédentes en s'appuyant sur les bords se faisant face 15, 16 et 17 spires 11 et 12 de la couche 3.

Les spires de la couche 3 sont collées en 5 sur la gaine intérieure 1 et les spires de la couche 3a sont collées en 7 sur l'enveloppe externe 2.

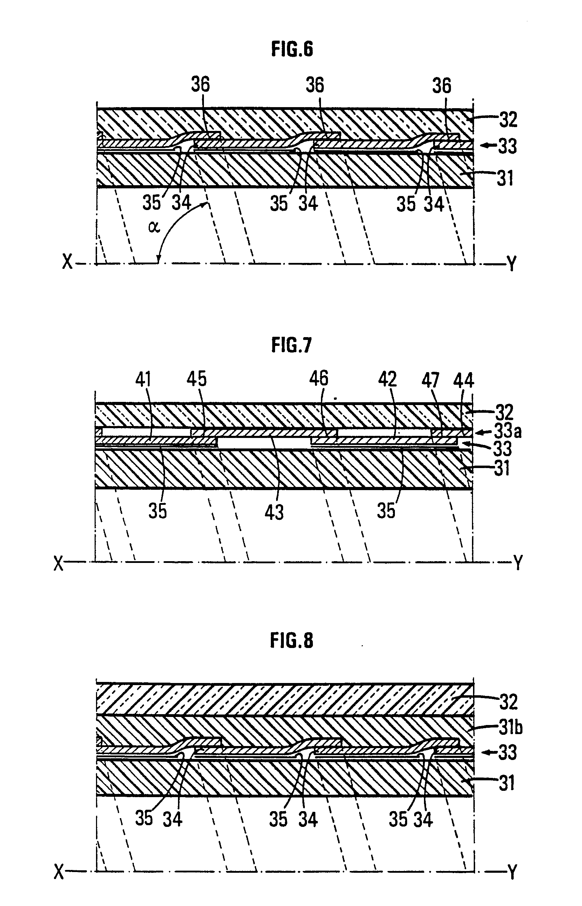

Dans la forme de réalisation préférée montrant un flexible sous pression (fig. 5), on a extrudé une gaine intérieure 1 d'épaisseur 4 mm en Rilsan 11 (marque déposée) au-dessus d'un feuillard 21 de diamètre extérieur 100 mm en acier inoxydable.

On dépose sur la gaine intérieure un mince film de colle thermofusible compatible avec le Rilsan 11, de largeur 3 mm suivant un angle d'enroulement en spirale égal à celui que l'on a adopté pour l'enroulement du ruban soit 84° environ, correspondant à un pas de 24 mm.

On enroule en spirale suivant une technique connue le ruban 3 d'alliage de métaux amorphes, préchauffé à une température sensiblement supérieure à la température de ramollissement de la colle, sous une tension d'enroulement de 200 Newton.

La largeur des zones de superposition des spires adjacentes représente 20% environ de la largeur de ces spires, soit 6 mm dans l'exemple considéré et le ruban est déposé de telle manière que seul le bord 5 du ruban soit collé sur la gaine intérieure 1.

Le ruban d'alliage de métaux amorphes avait les caractéristiques suivantes, susceptibles notamment d'assurer une bonne résistance à la corrosion:

Composition: $Fe_{72}$ $Cr_8$ $P_{13}$ $C_7$

Largeur: 3 cm

Epaisseur: 20/100 de mm.

On a extrudé ensuite une enveloppe externe souple 2 en polyéthylène moyenne densité de 2 mm d'épaisseur selon une technique connue, qui recouvre la couche métallique 3 selon l'invention.

Différentes frettes ont été enroulées au-dessus de l'enveloppe 2:

– une frette 22 en forme de S dite «zeta» et une autre frette 23 d'épaisseur 8 mm, toutes deux enroulées en hélice sous des angles environ de 85° et résistant à la pression,

– une nappe d'armatures 24 et une nappe d'armatures 25 à pas large et d'épaisseur 3 mm, résistant à la traction et enroulées en hélice, l'une posée à droite, l'autre posée à gauche sous un angle de 35°, avec l'axe du flexible,

– enfin, une dernière gaine externe 26.

On obtient dans ces conditions une canalisation flexible dont la flexibilité reste intacte et pour laquelle la perméabilité, par exemple au méthane, des couches 1, 2, 3 est réduite d'un facteur de l'ordre de 50 à 100 suivant les conditions d'utilisation, par rapport à une seule couche plastique d'étanchéité.

On ne sortira pas, par exemple, du cadre de l'invention en interposant une couche de graisse telle qu'une graisse à base de silicones insoluble dans les hydrocarbures et stable à la température, entre le ruban métallique 3 et la gaine 1 et/ou l'enveloppe 2, d'une part, et/ou entre les zones de contact ou de superposition 30 (Fig. 1) et 15, 16 et 17 (Fig. 4) d'une spire du ruban avec la suivante, d'autre part.

Selon la figure 6, où XY représente l'axe de la canalisation, une couche de ruban métallique 33 plat est enroulée et collée 35 avec une tension suffisante autour d'une gaine intérieure 31 molle, souple, en màtériau thermoplastique ou en élastomère qui, de ce fait, est soutenue par la face intérieure du ruban. La colle a été déposée sur la plus grande surface en contact entre la gaine 31 et la couche 33.

Le ruban est constitué d'un enroulement de spires 34 avec un angle $\alpha$ supérieur à 50° et inférieur à 90° par rapport à l'axe XY. Les spires 34 de ce ruban 33 présentent des zones de superposition 36 de façon à accepter d'éventuelles déformations lors d'une décompression de la canalisation et à assurer un recouvrement total de la gaine intérieure 31. Les zones de superposition 36 des spires 34 du ruban et les zones comprises entre les zones de superposition ont chacunes une largeur au moins égale à l'amplitude de la déformation (décompression, élongation ou raccourcissement) imposée aux gaines 32 de la canalisation.

L'étanchéité aux gaz contenus dans la conduite est ainsi sensiblement améliorée. Pour maintenir une plus grande rigidité, on entoure la canalisation comportant la gaine 31 et le ruban 33 d'une gaine extérieure 32 en màtériau composite enroulée à un angle inférieur à 90° par rapport à l'axe de la canalisation, suivant une technique connue par l'homme de l'art.

Les màtériaux composites utilisés peuvent être par exemple des fibres de verre, de carbone ou de Kevlar (marque déposée) imprégées de résine par exemple époxy, ou des composites à base de feuillard d'acier.

A froid, la résine va se réticuler et adhérer à la couche métallique que l'on aura préalablement dégraissée. Ce type de canalisation sera particulièrement avantageux pour les faibles et moyennes performances.

La figure 7 illustre une autre mode de réalisation de canalisation rigide où l'on a enroulé sur la gaine intérieure 31 une première couche de ruban 33 dont les spires 41 et 42 ne se recouvrent pas et une seconde couche 33a dont les spires 43 et 44 recouvrent les précédentes en s'appuyant sur les bords se faisant face 45, 44, 47 des spires 41 et 42 de la couche 33.

Les spires de la couche 33 sont collées en 35 sur la majeure partie au moins de la largeur en contact avec la gaine intérieure et de préférence sur toute la largeur des spries. Un enroulement d'une gaine extérieure 32 en matériau composite, comme ci-dessus, rigidifie la canalisation ainsi consitutée, en adhérant aux couches métalliques 33 et 33a.

Selon la figure 8, on représente un autre mode de réalisation de canalisation haute performance rigide où la gaine intérieure 31 est collée 35 et ainsi supportée par la couche métallique 33 constituée de spires 34.

Au-dessus de cette couche métallique, a été extrudée une autre gaine en thermoplastique ou en élastomère 31b venant s'appliquer et adhérer contre cette couche 33 qui, de ce fait, se trouve logée dans cette gaine molle comprenant les gaines 31 et 31b. La gaine 31b ainsi rigidifiée et sensiblement étanche aux gaz est ensuite entourée par au moins une gaine extérieure en matériau composite 32 telle que décrite ci-dessus.

La canalisation rigide, dans sa forme de réalisation préférée (Fig. 8), pour résister à des pressions élevées de l'ordre de 300 bars et à de hautes températures, comporte une gaine intérieure d'épaisseur 2 mm en «Rilsan 11» (marque déposée) et de diamètre 15 cm. On dépose sur la gaine intérieure un mince film de colle thermofusible compatible avec le Rilsan 11 de largeur 20 cm, suivant un angle d'enroulement en spirale égal à celui que l'on a adapté pour l'enroulement du ruban soit 84° environ.

On enroule en spirale suivant une technique connue le ruban 33 d'alliage de métaux amorphes, préchauffé à une température sensiblement supérieure à la température de ramollissement de la colle, sous une tension d'enroulement de 200 Newton.

Le ruban d'alliage de métaux amorphes a les caractéristiques suivantes, susceptibles notamment d'assurer une bonne résistance à la corrosion:

Composition: $Fe_{72}$ $Cr_8$ $P_{13}$ $C_7$

Largeur: 3 cm

Epaisseur: 20/100 de mm.

La largeur des zones de superposition des spires adjacentes, représente 20% environ de la largeur de ces spires, soit 6 mm dans l'exemple considéré et le ruban est déposé de telle manière que la majeure partie de la largeur des spires du ruban 33 soit collé sur la gaine intérieure 31.

Après avoir dégraissé la partie supérieure du ruban 33, on extrude suivant une technique connue une gaine plastique 31b en Rilsan 11 d'épaisseur 1 mm qui va niveler la couche 33 et enfin au-dessus de cette gaine 31b, on enroule au moins une couche de fibres composites telles que décrites, suivant des angles d'enroulement connus de l'homme de l'art et compatibles avec les forces de tension et de compression auxquelles la canalisation doit résister.

On obient dans ces conditions une canalisation rigide dans laquelle la perméabilité de la gaine intérieure 31, par exemple au méthane, est réduite d'un facteur de l'ordre de 50 à 100 suivant les conditions d'utilisation.

Les canalisations selon l'invention décrites ci-dessus peuvent servir notamment de moyens de transport de fluides hydrocarbonés corrosifs sous pression et température plus ou moin élévée. Ces conduites peuvent être utilisées pour des opérations de forage et de production d'hydrocarbures qui nécessitent de fortes contraintes dynamiques, la couche métallique 3, 33 pouvant éventuellemen servir à véhiculer des informations électriques du sous-sol à la surface et de la surface au sous-sol.

Les canalisations rigides peuvent être notamment utilisées comme tubes prolongateurs (risers) en forage et en production d'hydrocarbures.

## Revendications

1. Canalisation, utilisable notamment pour le transport de fluides éventuellement sous pression, permettant de limiter la perméabilité aux fluides transportés, comportant une gaine intérieure souple (1, 31) en matériau thermoplastique ou en élastomère, une gaine extérieure (10) comportant une couche métallique (3, 33) et disposée autour de ladite gaine intérieure (1, 31), dans laquelle ladite couche métallique comprend au moins une couche comportant au moins un ruban (3, 33) métallique flexible, mince, plat, ayant une épaisseur comprise entre 1/100 mm et quelques dixièmes de millimètres, enroulé en spirale avec un angle d'enroulement $\alpha$ supérieur à 50° et inférieur à 90° par rapport à l'axe de la canalisation, le ruban présentant des zones de superposition suivant lesquelles deux spires consécutives de ruban(s) se superposent de façon à assurer un recouvrement total de ladite gaine intérieure (1, 31), les zones de superposition (30) des spires du ruban d'une part, et les zones comprises entre lesdites zones de superposition d'autre part, ayant chacune une largeur au moins égale à l'amplitude de la déformation imposée à la gaine extérieure par la traction ou flexion maximales de la canalisation.

2. Canalisation selon la revendication 1, caractérisée en ce que le ruban métallique (3, 3a, 33, 33a) est en métal amorphe ou alliages de métaux amorphes.

3. Canalisation selon la revendication 1 dans laquelle la gaine extérieure est souple, caractérisée en ce que le ruban métallique (3, 3a, 33, 33a) est en métal amorphe ou alliages de métaux amorphes.

4. Canalisation selon la revendication 1, caractérisée en ce que ladite couche comporte une couche de ruban métallique (3) collée à ladite gaine intérieure (1), sur une partie de la largeur de cette couche en contact avec ladite gaine intérieure, les spires du ruban métallique pouvant jouer librement les unes sur les autres.

5. Canalisation selon la revendication 1, caractérisée en ce que ladite couche comporte une couche de ruban métallique (3) collée à une enveloppe externe (2) sur une partie de la largeur de cette couche en contact (4) avec ladite enveloppe externe (2), les spires du ruban métallique pouvant jouer librement les unes sur les autres.

6. Canalisation selon la revendication 4, caractérisée en ce que le ruban métallique est collé à ladite gaine intérieure (1) sensiblement au niveau de son bord en contact (5) avec ladite gaine intérieure (1).

7. Canalisation selon la revendication 5, caractérisée en ce que le ruban métallique est collé à ladite envelppe externe (2) sensiblement au niveau de son bord en contact (7) avec ladite enveloppe externe (2).

8. Canalisation selon la revendication 1, caractérisée en ce que le ruban métallique a une composition comprenant du chrome et au moins un métal du groupe comprenant le cobalt, le nickel et le molybdène.

9. Canalisation selon la revendication 2, caractérisée en ce que le ruban métallique a une composition comprenant du fer, du chrome, du phosphore, du carbone et éventuellement un métal du groupe comprenant le cobalt, le molybdène et le nickel, avec un pourcentage atomique de métalloïdes au plus égal à 20%.

10. Canalisation selon la revendication 1, caractérisée en ce qu'une couche de graisse est interposée entre ladite gaine intérieure (1) et ledit ruban métallique (3).

11. Canalisation selon la revendication 5, caractérisée en ce qu'une couche de graisse est interposée entre ladite enveloppe externe (2) et ledit ruban métallique (3).

12. Canalisation selon la revendication 1, caractérisée en ce qu'une couche de graisse est interposée entre les spires de ruban métallique (3) dans leurs zones de superposition (30, 15, 16 et 17).

13. Canalisation flexible selon la revendication 5, caractérisée en ce qu'elle comporte au moins deux couches superposées de ruban métallique (3, 3a, 33, 33a, Fig. 4), la couche (3) en contact avec la gaine intérieure (1) étant collée à celle-ci sur une partie (5) de la largeur du ruban métallique et la couche (3a) en contact avec l'enveloppe externe (2) étant collée à celle-ci sur une partie (7) de la largeur du ruban métallique.

14. Canalisation selon la revendication 1, caractérisée par la combinaison d'une gaine extérieure (32) en matériau composite, d'une gaine intérieure souple (31) et d'au moins une couche métallique (33) collée (35) à ladite gaine intérieure souple sur la majeure partie au moins de la largeur dudit ruban.

15. Canalisation selon la revendication 14, caractérisée en ce que la gaine extérieure (32) comporte en outre, une gaine souple (31b) extrudée sur ladite couche de ruban (33).

16. Canalisation selon la revendication 14, caractérisée en ce que ladite couche comporte une couche de ruban métallique (33) adhérant à la gaine extérieure (32) sur une partie au moins de la largeur de cette couche en contact (34) avec ladite gaine extérieure (32).

## Claims

1. Pipe used in particular for transporting fluids which may be under pressure and which limits the permeability of the pipe to the fluids being transported. It comprises a flexible inner sheath (1, 31) in a thermoplastic material or an elastomer, an outer sheath (10) comprising a metal layer (3, 33) arranged about the said inner sheath (1, 31) and where the said metal layer includes at least one layer, comprising at least one flat thin flexible metal strip (3, 33) with a thickness of between 1/100 mm and several tenths of millimetres wound on in the form of a spiral, the angle of winding $\alpha$ exceeding 50° and less than 90° relative to the axis of the pipe, the strip including areas of overlap in accordance with which two consecutive turns of the strip or strips are overlaid in order to ensure total coverage of the said inner sheath (1, 31), the overlapping areas (30) of the turns comprising the strip, on the one hand, and the area between the said overlapping areas on the other hand each having a width at least equal to the degree of deformation imposed on the outer sheath by the maximum tensile or bending stresses in the pipe.

2. Pipe in accordance with claim 1, characterised in that the metal strip (3, 3a, 33, 33a) is an amorphous metal or alloys of amorphous metals.

3. Pipe in accordance with claim 1 and in which the outer sheath is flexible, characterised in that the metal strip (3, 3a, 33, 33a) is an amorphous metal or alloys of amorphous metals.

4. Pipe in accordance with claim 1, characterised in that the said layer comprises a metal strip (3) bonded to the said inner sheath (1) over part of the width of the said layer in contact with the said inner sheath, the turns of the metal strip being able to flex freely relative to each other.

5. Pipe in accordance with claim 1, characterised in that the said layer comprises a metal strip (3) bonded to an outer envelope (2) over part of the width of the said layer in contact (4) with the said outer envelope (2), the turns of the metal strip being able to flex freely relative to each other.

6. Pipe in accordance with claim 4, characterised in that the metal strip is bonded to the said inner sheath (1) basically along its edge in contact (5) with the said inner sheath (1).

7. Pipe in accordance with claim 5, characterised in that the metal strip is bonded to the said outer envelope (2) basically along its edge in contact (7) with the said outer envelope (2).

8. Pipe in accordance with claim 1, characterised in that the metal has a composition which includes chrome and at least one metal from the group comprising cobalt, nickel and molybdenum.

9. Pipe in accordance with claim 2, characterised in that the metal strip has a composition which includes iron, chrome, phosphorus, carbon and, if necessary, a metal from the group comprising cobalt, molybdenum and nickel, with the atomic percentage of metalloids not exceeding 20%.

10. Pipe in accordance with claim 1, characterised in that a layer of grease is located between the said inner sheath (1) and the said metal strip (3).

11. Pipe in accordance with claim 5, characterised in that a layer of grease is located between the said outer envelope (2) and the said metal strip (3).

12. Pipe in accordance with claim 1 characterised in that a layer of grease is located between the turns of metal strip (3) in their areas of overlap (30, 15, 16 and 17).

13. Flexible pipe in accordance with claim 5, characterised in that it comprises at least two superimposed layers of metal strip (3, 3a, 33, 33a, Figure 4), the layer (3) in contact with the inner sheath (1) being bonded to it over part (5) of the width of the metal strip and the layer (3a) in contact with the outer envelope (2) being bonded to it over part (7) of the width of the metal strip.

14. Pipe in accordance with claim 1, characterised in that the combination of an outer sheath (32) made from a composite material, a flexible inner sheath (31) and at least one metal layer (33) bonded (35) to the said flexible inner sheath over at least the major part of the width of the said strip.

15. Pipe in accordance with claim 14, characterised in that the outer sheath (32) also includes a flexible sheath (31b) extruded over the said layer of strip (33).

16. Pipe in accordance with claim 14, characterised in that the said layer comprises a metal strip (33) bonded to the outer sheath (32) over at least part of the width of the said layer in contact (34) with the said outer sheath (32).

**Patentansprüche**

1. Rohrleitung, verwendbar insbesondere für den Transport von gegebenenfalls unter Druck stehenden Fluiden, die es erlaubt, die Permeabilität gegenüber den transportierten Fluiden zu begrenzen, mit einer nachgiebigen Innenhülle (1, 31) aus thermoplastichem oder elastomerem Material, einer Außenhülle (10) mit einer metallischen Schicht (3, 33), die um diese Innenhülle (1, 31) angeordnet ist, bei der diese metallische Schicht wenigstens eine Schicht mit wenigstens einem metallischen flexiblen dünnen flachen Band (3, 33) umfaßt, das eine Dicke zwischen einem Hundertstel Millimeter und etlichen Zehntel Millimetern aufweist und spiralförmig mit einem Wicklungswinkel $\alpha$ größer 50° und kleiner 90°, bezogen auf die Achse der Rohrleitung, gewickelt ist, wobei das Band Überlagerungszonen aufweist, längs deren zwei aufeinanderfolgende Spiralen aus Band oder Bändern sich derart überlagern, daß eine vollständige Überdeckung dieser Innenhülle (1, 31) sichergestellt ist, wobei die Überlagerungszonen (30) der Spiralen des Bandes einerseits und die Zonen zwischen diesen Überlagerungszonen andererseits je eine Breite haben, die wenigstens gleich der Amplitude der Verformung ist, die der Außenhülle durch maximalen Zug oder Biegung der Rohrleitung verliehen wird.

2. Leitung nach Anspruch 1, dadurch gekennzeichnet, daß das metallische Band (3, 3a, 33, 33a) aus einem amorphen Metall oder aus Legierungen amorpher Metalle besteht.

3. Leitung nach Anspruch 1, bei der die äußere Hülle nachgiebig ist, dadurch gekennzeichnet, daß das metallische Band (3, 3a, 33, 33a) aus einem amorphen Metall oder Legierungen amorpher Metalle besteht.

4. Leitung nach Anspruch 1, dadurch gekennzeichnet, daß die Schicht eine Schicht metallischen Bandes (3) umfaßt, das an diese Innenhülle (1) über einen Teil der Breite dieser Schicht geklebt ist, die in Kontakt mit dieser Innenhülle steht, wobei die Spiralen des metallischen Bandes freies Spiel einander gegenüber haben können.

5. Leitung nach Anspruch 1, dadurch gekennzeichnet, daß diese Schicht eine Schicht metallischen Bandes (3) umfaßt, die an eine äußere Hülle (2) über einen Teil der Breite dieser in Kontakt (4) mit dieser äußeren Umhüllung (2) stehenden Schicht geklebt ist, wobei die Metallbandspiralen freies Spiel einander gegenüber haben können.

6. Leitung nach Anspruch 4, dadurch gekennzeichnet, daß das metallische Band an diese Innenhülle (1) im wesentlichen in Höhe seines in Kontakt (5) mit dieser Innenhülle (1) stehenden Randes geklebt ist.

7. Leitung nach Anspruch 5, dadurch gekennzeichnet, daß das metallische Band an dieser Außenhülle (2) im wesentlichen in Höhe seines in Kontakt (7) mit dieser äußeren Umhüllung (2) stehenden Randes geklebt ist.

8. Leitung nach Anspruch 1, dadurch gekennzeichnet, daß das metallische Band eine Zusammensetzung aufweist, die Chrom und wenigstens ein Metall der Gruppe umfaßt, die Kobalt, Nickel und Molybdän umfaßt.

9. Leitung nach Anspruch 2, dadurch gekennzeichnet, daß das metallische Band eine Zusammensetzung aufweist, die Eisen, Chrom, Phosphor, Kohlenstoff und gegebenenfalls ein Metall der Gruppe umfaßt, die Kobalt, Molybdän und Nickel, bei einem Atomprozentanteil von Metalloiden höchstens gleich 20% umfaßt.

10. Leitung nach Anspruch 1, dadurch gekennzeichnet, daß eine Fettschicht zwischen diese Innenhülle (1) und dieses metallische Band (3) zwischengeschaltet ist.

11. Leitung nach Anspruch 5, dadurch gekennzeichnet, daß eine Fettschicht zwischen diese äußere Umhüllung (2) und dieses metallische Band (3) zwischengeschaltet ist.

12. Leitung nach Anspruch 1, dadurch gekennzeichnet, daß eine Fettschicht zwischen die Metallbandspiralen (3) in ihren Überlagungszonen (30, 15, 16 und 17) zwischengeschaltet ist.

13. Flexible Leitung nach Anspruch 5, dadurch gekennzeichnet, daß sie wenigstens zwei überlagerte Schichten metallischen Bandes (3, 3a, 33, 33a, Fig. 4) umfaßt, wobei die mit der Innenhülle (1) in Kontakt stehende Schicht (3) an diese über einen Teil (5) der Breite des metallischen Bandes geklebt ist und die in Kontakt mit der äußeren Umhüllung (2) stehende Schicht (3a) an diese über einen Teil (7) der Breite des metallischen Bandes geklebt ist.

14. Leitung nach Anspruch 1, gekennzeichnet durch die Kombination einer äußeren Hülle (32) aus Verbundmaterial, einer inneren nachgiebigen Hülle (31) und wenigstens einer metallischen Schicht (33), die an die nachgiebige Innenhülle wenigstens über den größten Teil der Breite des Bandes geklebt ist.

15. Leitung nach Anspruch 14, dadurch gekennzeichnet, daß die Außenhülle (32) im übrigen eine nachgiebige Hülle (31b) umfaßt, die auf diese Bandschicht (33) extrudiert ist.

16. Leitung nach Anspruch 14, dadurch gekennzeichnet, daß diese Schicht eine Schicht aus Metallband (33) umfaßt, das an der Außenhülle (32) über wenigstens einen Teil der Breite dieser Schicht haftet, die in Kontakt (34) mit dieser Außenfülle (32) steht.

**FIG.2**

**FIG.1**

**FIG.3**

**FIG.5**

**FIG.4**

EP 0 225 901 B1

## FIG.6

## FIG.7

## FIG.8